# EUROPEAN PATENT APPLICATION

(11) **EP 2 578 312 A2**
(43) Date of publication of application: **10.04.2013**
(21) Application number: 12460026.3
(22) Date of filing: 31.05.2012
(51) Int. Cl.: B01J 20/30, B01J 20/20, B01J 20/06, B01J 20/04, B01J 20/28

(54) **A method for producing carbon-containing sorbent materials**

(30) Priority: 10.06.2011 PL 39521411
(71) Applicant: Rogut, Stanislaw, 74-200 Pyrzyce (PL)
(72) Inventor: Rogut, Stanislaw, 74-200 Pyrzyce (PL)
(74) Representative: Kachnic, Tadeusz

(57) **Abstract**

The subject of the invention is production method of new generation carbon sorbent with organised and repetitive structures.

A method of manufacturing carbon-containing sorbent materials comprising careful mixing of carbon-containing raw materials and corrective supplements with reagents, optimally with hydrates of oxides of I, II III groups of periodic system received homogeneous substance is exposed to low temperature carbonisation and carbonisation process with simultaneous dehydration process of contained hydrates, creating autogenous microreators in each single grain of hydrate inside created substance and received as a result of low temperature carbonisation by thermal decomposition, overheated dry steam of high temperature, over 500°C, is directed in opposite direction through whole volume of stream, of constantly delivered to the process new batch of low temperature carbonized and carbonized raw material, along with corrective supplements and hydrates in different phases of transforming said raw material into porous sorbent structures, evenly heating them in whole volume, in lower part of low temperature carbonisation and carbonisation zone from 500° C to 280° C and then in upper zone of low temperature carbonisation and carbonisation up to the temperature of 280° C to - 100° C, whereas as a result of forced flow in opposite direction of overheated dry steam through created porous sorbent structures, volatile and tarry product of thermal decomposition are released, which along with steam are directed upwards, where they meet reactive hydrates of elements of I, II, III group of periodic system, constituting filters binding liquid and gaseous impurities, moreover by directing against the stream dry overheated steam through tubes and pores of creating sorbent, simultaneously a process of effective refinement and activation of porous sorbent structures is conducted.

## Description

Known methods of processing carbon-containing raw materials into carbon-containing sorbent materials comprise using thermal treatment of carbon-containing raw materials by low temperature carbonisation and then carbonisation and refinement of formed structures using by-products created in low temperature carbonisation process.

In the treatment process, one or several successive unitary operations are conducted in one or several appliances. First a drying process is performed and then in controlled conditions, low temperature carbonisation and carbonisation process of dry remains into a product of desirable properties.

Most of technologies of production of such sorbents are based on low temperature carbonisation of agricultural or forest biomass especially of biomass containing great amounts of lignocellulose. Production processes are performed in few phases. In the initial phase, the initially dried biomass is subjected to low temperature carbonisation at temperatures below 300°C without air access or with little amount of air in order to cause partial carbonisation. The product produced in the initial phase is called torrefied coal or torrefied charcoal. In another phase of the process, carbonisation takes place at temperatures above 300°C, and preferably between 450°C to 500°C. During initial heating of low temperature carbonized semi product at said temperatures, the carbonisation process is continued with decomposition into lignocellulose parts and other compounds and creating porous structures of activated carbon and releasing of product most often in form of pitchy mixtures of various chemical compounds.

To receive carbon of good quality it is necessary to remove the pitchy products cumulated in tubules of evaporation path or blowing said products with inert gases or with water steam. Removed from the inside of tubules pitchy substances and gaseous products of thermal decomposition are left inside the sorbents porous carbon structures.

Detailed description of processes taking place in carbon-containing raw materials and biomass during low temperature carbonisation is disclosed in French patent No. 839732 and No. 872164 and German patent No. 2802213. According to the cited patents, boundary temperatures separating low temperature carbonisation process from carbonisation process are temperatures of 270°C to 300°C. In said temperature range during thermal decomposition of lignocelluloses appears exothermic effect. Basic disadvantage of the product of initial low temperature carbonisation phase is non-homogeneous composition and form and mediocre functional characteristics.

The basic technical problem in the previously used methods of low temperature carbonisation is an effective method of heating low temperature carbonized material to the required temperatures. To heat material to the temperature, that exothermic decomposition begins convection methods of heat exchange such as blowing with hot air, water steam or exhaust gases. The basic technical and technological problem in this case is to receive uniform granularity subject to biomass carbonisation and evenly heat in low temperature carbonisation chamber. To receive a stable quality of the product, it is necessary to use low temperature carbonisation of all of the biomass components in the conditions of constant temperature and with constant and uniform flow of hot gasses through tubules and pores existing in formed elemental carbon grains. To create stable and identical low temperature carbonisation conditions in regard to each carbon-containing raw material grain subject to processing are used various appliances of distribution of hot gasses between lumps of initially low temperature carbonized material.

In European Patent No. 0073714 a number of operations is described that ensures stable thermal conditions of low temperature carbonisation and carbonisation in order to receive product of uniform properties and high caloric value. In the description, it is underlined that to receive a high quality product with inside of the grains being devoid of remains of pitchy products, it is necessary to use as heating medium inert hot gasses such as nitrogen, helium, carbon dioxide or overheated water steam. The condition to receive good quality products in technologies used so far is preparation of the material subject to low temperature carbonisation of high degree of granularity and homogenization, as only very high degree of granularity and homogenization allows receiving product of high quality and simultaneously preserving economical times of low temperature carbonisation below 30 minutes.

Another factor having influence on quality of products formed during low temperature carbonisation is conducting the process in constant low temperature carbonisation temperature in narrow scope, preferably in 280°C to 300°C, not to allow uncontrolled exothermal decomposition reaction of processed raw material (self-acting pyrolysis process). Only biomass low temperature carbonisation processes preformed in conditions of stable and controlled temperature allow receiving carbon sorbents in economical way in amounts approximate to 35% w/w of processed raw material. Model researches show, that starting in temperatures below 280°C being difficult to control exothermal decomposition processes of carbon-containing raw materials, especially if they contain large amount of lignocelluloses.

In a low temperature carbonisation process within the temperature range of 280°C - 300°C two competitive thermo chemical processes occur. First is quick thermo condensation reaction undergoing rapid slowdown as approaching mentioned temperature range, and second is exothermal carbonisation process. In the event of the presence of even a small amount of oxygen in the blown and heating gasses, carbonisation process becomes difficult to control and very often it leads to complete pyrolysis of the product.

To prevent from uncontrolled pyrolysis of low temperature carbonized biomass in carbonisation phase American Patent No 4,954,620 proposes solution consisting on very precise control of the temperature during particular low temperature carbonisation phases. It involves complex and often unreliable systems of temperature control and heating and blowing gasses flow. In the solution according to the patent cited it is underlined that receiving product of high quality requires maximal isothermal conditions, so between low temperature carbonized grains and outside heating condition exist only little temperature gradient of several Celsius degrees. Also Swiss patent No 228877; French patent No 953004 and American patent No 4,553,978 confirms necessity of keeping specific temperature conditions of low temperature carbonisation process and high degree of biomass grinding. In cited descriptions it is underlined enormous influence of temperature conditions and method of transferring heat from heating gasses to grains of low temperature carbonized material on properties of manufactured product.

Carbon sorbents manufactured with present methods characterize with little sorption abilities due to the fact, that ability of absorb harmful chemical substances depends on size and structure of sorption surface of created sorbent and geometry of tubules created inside grains of produced sorbent during sorbent manufacturing process. In most of the cases we deal with impermanent temporary binding off absorbed substances by physical absorption what impend with releasing them into the stream of flowing through sorbent gasses or liquids, especially in the event of reaching sorbent maximal saturation or after reaching its optimal temperature of work.

The problem difficult to overcome during sorbent manufacturing, especially carbon sorbents is to form spatial structures of high mechanical durability. In many sorbent applications especially industrial sorbents, it is very important the sorbent to have a form of porous granules of very high mechanical durability and attrition resistance. Most of present methods consist of manufacturing granules from already received sorbent in high pressure granulating appliances or by adding to dusty sorbent bonding substances.

The purpose of the invention is elimination of existing technological difficulties of low temperature carbonisation and carbonisation, determining economic effectiveness of the process and quality of product received as well as creating stabile low temperature carbonisation conditions to prevent arising of uncontrolled pyrolysis phenomenon.

The method of manufacturing carbon-containing sorbent materials, according to the invention, characterized by the fact that after careful mixing of carbon-containing raw materials and corrective supplements with reagents, optimally with hydrates of oxides of I, II III groups of periodic system received homogeneous substance is exposed to low temperature carbonisation and carbonisation process with simultaneous dehydration process of contained hydrates, creating autogenous micro reactors in each single grain of and received as a result of low temperature carbonisation by thermal decomposition, overheated dry steam of high temperature, over 500°C, is directed in opposite direction through whole volume of stream, of constantly delivered to the process new batch of low temperature carbonized and carbonized raw material, along with corrective supplements and hydrates in different phases of transforming said raw material into porous sorbent structures, evenly heating them in whole volume, in lower part of low temperature carbonisation and carbonisation zone from 500°C to 280°C and then in upper zone of low temperature carbonisation and carbonisation up to the temperature of 280°C to - 100°C, whereas as a result of forced flow in opposite direction of overheated dry steam through created porous sorbent structures, volatile and tarry product of thermal decomposition are released, which along with steam are directed upwards, where they meet reactive hydrates of elements of I, II, or III group of periodic system, constituting filters binding liquid and gaseous impurities, moreover by directing against the stream dry overheated steam through tubes and pores of creating sorbent, simultaneously a process of effective refinement and activation of porous sorbent structures is conducted.

Advantageous, according to the invention is that as organic carbon-containing raw materials is used beet sugar, preferably in form of cumulated purified aqueous solution containing from 50% to 90% w/w of sugar and reagent, preferably burnt lime grounded in high reactivity, preferably with parameter of t₆₀ < 2 minutes in amount of from 5 to 30% preferably 18% of w/w, whereas mentioned components are added to the process with constant w/w efficiency continuously, roasting them at the same time and carefully mixing and displacing reacting substance in reaction chamber, then we carry out a drying and homogenization processes of received substance, in form of loose, dry and granulated semi- product of homogeneous structure, next received substance is subject to low temperature carbonisation and carbonisation by letting hot gasses received from combustion of part of drawn away low temperature carbonisation products, or received sorbent is displaced to roast zone with temperature of 600°C, where porous carbon sorbent agglomerates and grains of calcined calcium oxide with significant mechanical resistance are produced.

Advantageous, according to the invention, is that dry, ground homogeneous refined saccharine mixture is used with addition of 1.0% to 10%, preferably 5%, of ground burnt lime of very high purity and reactivity or 1.3% to 13%, preferably 6 % of calcium hydrate of very high purity.

In the process as raw materials batch are used shredded homogenous organic materials of high purity, preferably sugar, starch, cellulose and/ or organic substances of uniform chemical structure separately or in form of mixtures, said raw materials after mixing with very pure oxides or hydrates of elements of group I, II and III of periodic table, preferably calcium oxide or hydrate used raw material batch to produce carbon sorbents of special purpose with ordered structures.

As carbon-containing substances used chemical substances preferably monosaccharide, of which structures contain 3 to 7 carbon atoms and/ or polysaccharides which are combination of monosaccharide, preferably glycerine, ribose, deoxyribose glucose, fructose, mannose and galactose and disaccharides, oligosaccharides or polysaccharides.

To initially shredded raw material, preferably to dry sugar of 99.99% purity, 10% w/w of pure reactive ground burnt calcium is added, containing at least 99.9% of CaO or 13% w/w of pure ground calcium hydrate Ca(OH)₂ containing at least 99.9% of hydrate, and then received homogenous raw material batch is constantly distributed to low temperature carbonisation and carbonisation zone, sustaining monitored temperature profile from environmental temperature up to 800°C, so displaced by particular zones of reactive chamber raw material batch is subject to sequential low temperature carbonisation and carbonisation reactions and then subject to refinement of produced porous carbon structures by directing in raw material batch autogenous stream of hot steam, generated during thermal decomposition of hydrates.

Contained in produced sorbent metal oxides and/ or their hydrates are removed by rinsing with solvents, including water, preferably distilled water and/ or acids, preferably diluted acids aqueous solutions composing soluble salts with metals oxides and hydrates occurred in the sorbent.

Carbon-containing raw material subject to low temperature carbonisation and carbonisation are used organic substances containing chemical compounds of aliphatic or cyclic structure of maximal high purity and repeatability of structures, preferably refined coal tars, pitch, polymers and copolymers of cyclic and aliphatic compounds.

In the low temperature carbonisation and carbonisation process to raw material input are added heat resistant metal elements in form of balls, rings, cylinders of various sizes or similar elements made of heat resistant chemical compounds, such as calcium, aluminium, magnesium oxides.

Amount of generated water steam used in refinement process is controlled by changes of the amount of oxide or hydroxide in raw material batch and temperature of refinement is controlled by change of used type of metal oxide or hydroxide of I, II or III periodic table.

Carbon-containing raw material batch subject to low temperature carbonisation and carbonisation process is supplemented preferably with dissoluble hydroxides and oxides of metals with catalytic properties, preferably of zinc, iron, chrome, vanadium, nickel, cobalt, manganese, silver, copper or solutions of colloidal molecules of said metals, preferably in colloidal form, preferably of nickel, molybdenum, vanadium, silver, gold, copper.

The raw material batches subject to low temperature carbonisation and carbonisation are supplemented with chemical compounds of catalytic properties and activating structures of activated carbon, preferably with compounds of metals and metalloid, preferably in shredded form and/ or in form of aqueous solution of its salts dissoluble in water.

In the low temperature carbonisation as raw material batch sugar is used in amount of 50% to 90% w/w, preferably in 85% w/w, with calcium oxide in amount of 5% to 15%, preferably 10% w/w and magnesium oxide in amount of 2% to 10%, preferably in 5% w/w, and product received as a result of low temperature carbonisation is shredded and mixed with water in order to receive 30 - 50%, preferably 40% water slurry, then received substance is blown with gaseous carbon dioxide until full transformation of contained in the sorbent calcium and magnesium hydroxides into inert carbonate, and created product containing in dry condition 50% of activated carbon and 50% of mineral components, mostly in form of calcium carbonate (fine-crystalline chalk precipitated) and magnesium carbonate, is dried and granulated.

To concentrated sugar solution containing from 60 to 90% preferably 85% of pure saccharine and from 10 to 40%, preferably 15% of water a 0.1 to 2.0%, preferably 0.5% of elements or its catalytic compounds, preferably of zinc, iron, copper, chrome, vanadium, nickel, cobalt, manganese, molybdenum, silver, gold, platinum in form of colloidal particles of said metals and/or their chemical compounds, preferably in form of salt aqueous solutions and/ or hydroxides receiving uniform mixtures that are condensed by adding 10% w/w of reactive calcium oxide.

To give to the produced sorbents spatial structures with high porosity, mechanical durability and attrition resistance, first, bearing structures of the sorbent are prepared, preferably of steel fibers made of heat resistance and heat-temperature creep resisting steel, preferably with surface section of 0.1 to 1.0 mm² and various shapes, preferably with circular, rectangular, oval or polygonal shape section, preferably previously treated with chemical compounds solutions facilitating adherence of input substances to materials constituting said structures, preferably produced in form of stricken or woven spatial structures formed into appropriate solids, said bearing structures are saturated with solutions of input subject to low temperature carbonisation and carbonisation, preferably to complete filling of their interiors, then complete inputs are subject to low temperature carbonisation and carbonisation process in order to create structures of porous activated carbon, forming with said bearing structures integrated sorbent structures.

Advantageous, according to the invention, is introduce to the process spatial structures of high porosity, mechanical durability and attrition resistances porous solids, made of natural and/ or synthetic minerals, preferably of pumice, bentonite, sintered aluminium or LECA (light expanded clay aggregate) oxide, preferably of ceramic sinters.

As a result of applying the method according to the invention, there is created possibility of producing sorbents of new generation with organised and repetitive structures. The process is conducted by low temperature carbonisation and carbonisation of carbon-containing raw materials of organic origin in the presence of chemical compounds releasing gas substances during low carbonisation process. As carbon-containing raw materials are used organic raw materials with high and very high level of purity and uniformity as same as the biomass, especially agricultural biomass, hard coal, charcoal, peat, by-products of agricultural processing industry. Sorbents manufactured with the method according to the invention receive very high purity and uniformity of created carbon structures, high chemical reactivity and organized repetitive structure.

In the event of manufacturing carbon sorbents with method according to the invention built in carbon sorbent structures metal oxide or hydroxide micro grains bond flowing harmful chemical substances such as HCl, H₂S, H₂SO₄, HF or HCN and many more to form of salt often difficult or very difficult soluble, that are permanently build into sorbent structures.

In carbon sorbent created with method according to the invention as distinct to sorbents used till now, occur additional and unexpected physical and chemical processes. The sorbent consist of active carbon grain agglomerates playing function of filter separating harmful substances contained in purified gasses and liquids, whereas grains of metal oxides and hydroxides constitute binding ingredient chemically said substances into form of difficult soluble salts. The ability to bond chemical substances by sorbents produced with the method according to the invention may be regulated by change of amount of metal oxides added to low temperature carbonized substances before undergo low temperature carbonisation process. Depending on mixture composition of carbon-containing raw materials and metal oxides possible is to receive sorbents with diverse ability of qualitative and quantitative bonding of impurities flowing through the sorbent.

Unexpected field of sorbents use received with method according to the invention is ability to bond heavy metal ions such as Zn++, Pb++, Cu++, Co++, Cr+++ or precious metals such as Ag+, Au+. During flow of waste solutions containing soluble salts of said metals (sulfate, nitrates, chlorides, cyanides, etc.) soluble chloride, sulfate, nitrates or cyanides ions react with calcium oxide or hydroxide contained in the sorbent producing salt, and high alkaline reaction created inside the sorbent transforms ions of mentioned metals into gels of difficult soluble hydroxides. The sorbent used in sorption process after undergo combustion process produces ash constituting raw material enabling recovery of precious valuable metals.

In special use it is possible to add to raw material undergoing low temperature carbonisation and carbonisation metals with catalytic activity preferably in form of their salts such as AlCl₃, MgCl₂, FeCl₂, FeCl₃, CuCl₂, CrCl₃ and compounds activating surfaces of produced sorbent for example phosphoric acid. As a result of adding to raw material batch above components produced sorbents receive catalytic properties useful in many industrial processes.

Another unexpected effect of the method according to the invention is ability to produce extra pure active carbons with organized structures. Lack of possibility of carbon production especially active carbons with organized repetitive microstructures is one of basic barriers preventing carbon base nanotechnologies development. Carbon raw materials used so far in nanotechnologies for example from wood low temperature carbonisation, vegetable waste biomass, soot thermal treatment, etc., do not ensure carbon micro grains with necessary purity level and repetitive of carbon structures found in said micro grains (carbon chains and rings). In case of biomass low temperature carbonisation and carbonisation with the method according to the invention due to unavailable in other methods possibility of process parameters control of carbon-containing raw materials of high and very high purity level and structures organization it is possible to produce carbons with structures being derivatives of carbon structures present in raw materials used to produce them.

### Example 1

### Method of producing carbon - based sorbents

Concentrated and purified beet sugar in form of aqueous solution (syrup) containing from 50% to 80 % w/w of sugar is added with constant w/w efficiency continuously in amount of 2 Mg/h with dosing system 4 to initial mixer inlet 5. In controlled way ground burnt lime of high reactivity, preferably t₆₀ < 2 minutes, is added in amount from 5 to 30%, preferably 18% w/w from reagent container 2 through a dosing system 4 to the same initial mixer 5. Reacting mixture is displaced through a drying reactor performing drying process and homogenization of the mixture with FuelCal® technology. Mixed components are dried with heath of exothermal reaction of water contained in sugar solution with reagent containing calcium oxide in reactor 6 receiving loose, dried, granulated and warmed semi product of uniform homogenous structure. Emitted during solution drying process water steam vapours are diverted by reactor dome 7 to cooler 8 where the vapours are condensed. Received product is distributed immediately to low temperature carbonisation and carbonisation appliance or is transported to semi-product container in order to use in low temperature carbonisation and carbonisation and carbonisation in separate system. The appliance preferably in form of cylinder chamber 11 is surrounded with external heating coat 12.

The appliance is heated with hot gases produced in combustion of part of diverted by extraction system 14 low temperature carbonisation gases in burner 13. As a result of processes occurred in semi- product mixture subject to low temperature carbonisation, of exothermal and/ or additional heating of calcination chamber with external heating systems in the appliance there are controlled temperatures zones from environment temperature in the inlet upper part of the appliance to temperatures close to 800°C in zone of maximal temperatures, then to drop in outlet part (cooling zone).

As a result of slow migration of low temperature carbonisation material through zones of variable temperatures further phases of low temperature carbonisation and carbonisation processes occur. In upper inlet part of low temperature carbonisation appliance batch is dried with releasing hygroscopic water, then parts of batch are heated up to temperatures of releasing sugar included in batch of the most volatile components. As the material is getting closer to the middle zone in temperatures exceeding 500°C the carbon low temperature carbonisation process changes into carbonisation process that in final phase is accompanied by intensive process of decomposition of contained in calcined material calcium hydrate into calcium oxide and water steam. Emitted as a result of calcium hydrate decomposition pure active overheated dry water steam is directed upwards against the stream to shifted downwards mixture of law temperature carbonized and carbonized material, assisting with removing of evaporated from low temperature carbonized material volatile and gaseous organic components. As closing to the maximal temperatures of 800°C zone there is end of processes of the low temperature carbonisation, carbonisation and agglomeration of carbon grains with lumps of porous calcium oxide from decomposition of thermal calcium hydrate.

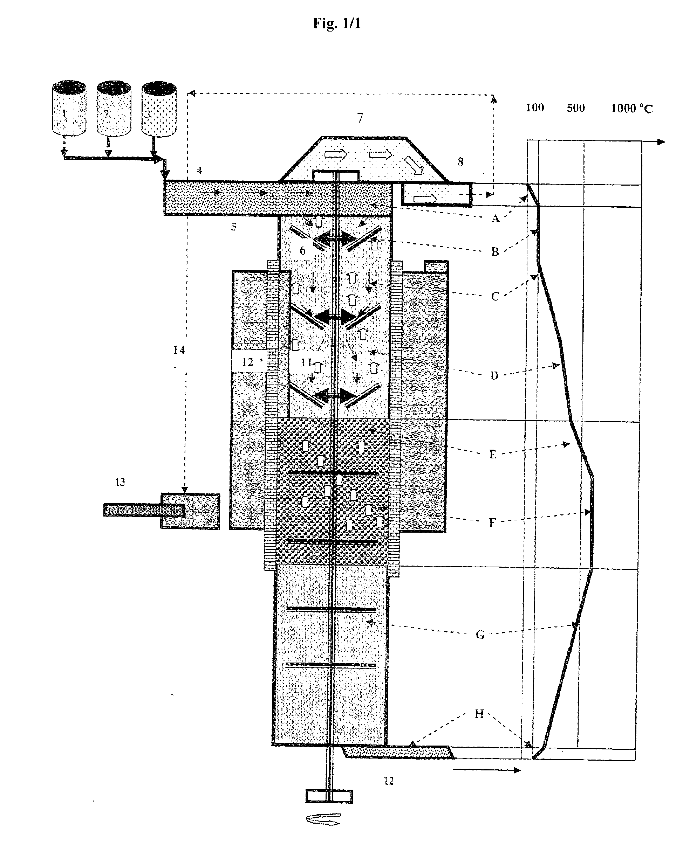

The exemplary temperature distribution in particular zones of the low temperature carbonisation appliance is shown in the sole figure. In said appliance particular temperature zones are marked with letters from A to H and play the following role:
A - transport and the batch heating zone from environment temperature up to 100°C;
B- drying zone up to temperature of 170°C;
C- endothermic heating and preliminary low temperature carbonisation up to 270 - 300°C;
D - exothermal low temperature carbonisation zone up to 400°C;
E - heating and endothermic low temperature carbonisation up to temperature exceeding 520°C;
F- calcium hydrate calcination and over heated water steam of calcium hydrate decomposition generating zone; G - created product cooling and agglomeration zone,
H - produced agglomerate cooling and crushing zone.

In the effect of using very pure sugar as raw material in form of concentrated water solution and using very pure ground burnt lime of very high reactivity as reagent, during roasting of low temperature carbonized mass in roasting temperatures exceeding 550°C occurs decomposition of calcium hydrate present in low temperature carbonized mass with creation of reactive calcium oxide and overheated water steam. Released during calcination of millions of fine grains of calcium hydrate overheated water steam flows against the stream through porous structures of surrounding active lime coal grains taking from tubules inside the grains of created porous active carbon volatile components, through which received agglomerate of fine active coal and fine calcium oxide increase absorbing and impurities bounding abilities. Described unique phenomenon of refining structures of created product for purposes of described phenomenon was called water steam authogenic refinement of carbon sorbent.

Micro grain mixture of active carbon and fine crystalline calcium oxide in form of crystal agglomerate of both components leaving autogenic refinement zone is transported downwards the low temperature carbonisation appliance and then after cooling and possible crushing or grinding is transported to the product container.

### Example 2

### Method of producing carbon - based sorbents

The process is conducted according to Example 1, with the difference that instead of concentrated sugar solution dry, ground homogeneous refined sugar mixture is used with addition of 5%, of ground burnt lime of very high purity and reactivity or 7% of calcium hydrate.

### Example 3

### Method of producing carbon - based sorbents

The process is conducted according to Example 1, with the difference that in process as raw material batch ground homogenous organic materials are used of high purity such as sugar, starch, cellulose or organic substance of uniform chemical structure separately or in mixtures. Said mixtures after mixing with very pure active oxides or hydrates of elements of group I, II and III of periodic table create raw material batch to produce carbon sorbents of special use with organized structures and additional abilities of acids bonding and neutralizing. Subject to process are carbon-containing substances of maximal purity and structure organization (cellulose, starch, carbohydrates, sugar and others). The most important raw materials possible to use in production of super pure active carbons with repetitive microstructures are monosaccharide with structure of 3 to 7 carbon atoms and polysaccharides which are combination of monosaccharide.

Monosaccharides can exist in chain or ring form if they contain at least 4 carbon atoms per particle. All mentioned monosaccharide easily crystallize and are easily soluble in water. In view of atom number they can be divided into trioses, tetroses, pentose, hexose, heptoses, and in view of type of carbonyl group type: ketosis (including ketonic group C=O), and aldose (including aldehyde group -CHO). Monosaccharide possible to use in the process inter alia are five-carbon ribose and deoxyribose and six carbon: glucose, fructose, mannose and galactose. Possible for use in the process are disaccharides, oligosaccharides or polysaccharides, for example: maltose (glucose + glucose), saccharose (glucose + fructose), lactose (glucose + galactose).

Included in produced sorbent metal oxides and/or its hydrates are washed with water preferably distilled water, receiving pure carbon products useful in further processes. To produce such a product, to granulated dry disaccharide containing at least 99.99 % of pure saccharine 10 % w/w of pure reactive ground burnt lime containing at least 99.9 % of CaO or 13% w/w of pure ground calcium hydrate Ca(OH)₂ containing at least 99.9 % of hydrate and then such a mixture is constantly added into low temperature carbonisation and carbonisation appliance, where controlled temperature profile is maintained from environment temperature up to temperature of 600°C. Raw material batch shifted through reactor areas in sequence undergoes low temperature carbonisation reaction, carbonisation reaction and then refinement of porous carbon structures by autogenous stream of overheated water steam generated in thermal decomposition process occurring in processed calcium hydrate material. Received product contains up to 70 % w/w of reactive elementary coal of organized structure and up to 15% of reactive calcium oxide.

Mixture of produced refined carbon with calcium oxide is used as semi product to produce basic nanotechnology materials or as possessing ability of bonding acid substances absorbent of impurities existing in gasses and liquids.

### Example 4

### Method of producing carbon - based sorbents

The process is conducted according to Example 2 and 3, with the difference that as raw material granulated wet cellulose product are used. To granulated wet material containing 60% of cellulose 15 % w/w of reactive burnt lime is added and then it is processed in processing system. Received product containing up to 70% of porous active charcoal and up to 30% of calcium oxide, is used as sorbent to purify contaminated waters and acid sewage containing heavy metal compounds.

### Example 5

### Method of producing carbon - based sorbents

The process is conducted according to Examples 2 to 4, with the difference that as carbon-containing raw material subject to low temperature carbonisation and carbonisation organic substances containing chemical compounds of cyclic and aliphatic structure are used. It is important, to receive products of high quality with repetitive structures, the raw material to contain above mentioned substances of maximal purity and repeatability of structure. Substances subject to process can be refined coal tars, pitch, polymers and copolymers of cyclic and aliphatic compound.

### Example 6

### Method of producing carbon - based sorbents

The process is conducted according to Example 1 or 2, with the difference that raw material batch contain mentioned raw material of various degree of purity. Gaseous and liquid products of low temperature carbonisation and carbonisation of such raw materials produced during shifting through upper part of the appliance contact with raw material batch containing reactive calcium hydrate constituting chemical filter binding impurities existing in gaseous and liquid low temperature carbonisation products. Due to the above phenomenon an effective binding occur of existing in, said products, impurities especially if these are acid chemical compounds (H₂S, SO₂; SO₃, HCl; HF and others).

As the result of presence in the raw material subject to low temperature carbonisation and carbonisation, of calcium hydroxide is fact, that along with water steam from the drying and low temperature carbonisation reactor gaseous and liquid low temperature carbonisation products are purified from the most harmful chemical impurities. Due to said reactions it is possible to use said product in more effective way (combustion, distillation, rectification, etc.) without necessary in previous low temperature carbonisation and carbonisation processes complicated and expensive purifying operations. Created in metal hydrates reactions with existing in processed materials impurities, salts especially gypsum or calcium chloride poses thermal decomposition temperatures much higher than calcium hydrate decomposition temperatures and that is why during shifting through low temperature carbonisation and carbonisation zones are not thermally decomposed and return of said impurities with gases of flowing water steam and low temperature carbonisation products is impossible.

### Example 7

### Method of producing carbon - based sorbents

The process is conducted according to Examples 2 to 6, with the difference that during the low temperature carbonisation and carbonisation process with the method according to the invention one tend/ aims to create stabile temperatures of low temperature carbonisation and carbonisation. Thermal stabilization is received due to adding to the raw material batch chemical compounds of calcium, aluminium, magnesium oxides type, that in temperatures of low temperature carbonisation and carbonisation poses high isolating abilities (low heat conduction) and high ability of heat generation ( proper heat). Stabilization of thermal conditions in low temperature carbonisation and carbonisation processes easier due to the presence of minerals micro grains in material grains (first hydrates, then after reaching calcination temperatures oxides). Porous structures of elementary carbon created from carbon-containing raw material grains during low temperature carbonisation, regardless of low temperature carbonisation phase characterize with high coefficient of heat conduction and low proper heat. In the event of conducting the process with method according to the invention in semi product undergoing carbonisation in, beside carbon grains also metal oxides and hydroxides appears characterized with similar to carbon heat capacity (proper heat) but much lower heat conduction.

Due to the enormous differences in heat conduction abilities metal oxide and hydrate grains perform in low temperature carbonisation process thermal insulators and temperature stabilizers function. Due to above solution in particular phases of the low temperature carbonisation and carbonisation process exist similar thermal conditions (temperature gradients) and similar conditions of heat exchange.

### Example 8

### Method of producing carbon - based sorbents

The process is conducted according to Examples 1 to 7, with the difference that at the simultaneously with low temperature carbonisation and carbonisation process a refinement process of created elementary carbon spatial structures is conducted with overheated water steam created during autogenous method of thermal decomposition metal hydrates constituting raw material batch ingredients. The basic advantage of conducting carbon structures refinement process with overheated water steam is creation of identical conditions of water steam flow through sorbent grains (both in regard to water steam temperature as well as the intensity of the flow). The effect of low temperature carbonisation process conducted with method according to the invention is arising of not present in other processes an autogenous phenomenon of generating active overheated water steam by each metal hydroxide (hydrate) grain present in processed raw material at the moment of reaching by said hydroxide (hydrate) grain calcination temperature. During conducting low temperature carbonisation and carbonisation process with method according to the invention overheated water steam generates itself in every hydrate grain achieving calcination temperature.

In the event of conducting low temperature carbonisation and carbonisation process with method according to the invention water steam generates itself and there is no need to supply steam from outside. In the event of presence of calcium hydroxide in the low temperature carbonized raw material batch reaching calcium hydrate calcination temperature Ca(OH)₂ (520°C do 530°C) each hydrate grain releases hot gaseous water steam. Volume of released water steam depends on w/w participation of calcium hydrate in material shifted through calcination area. In the event of raw material batch containing 20% w/w of calcium oxide and 80% w/w of sugar during passing by low temperature carbonized products through calcination area each kilo of raw material batch releases at least 0,217 m³ of water steam with temperature of 530°C (in calcination process temperature conditions.

Volume of generated active water steam many times excess the volume of created low temperature carbonisation product ensuring effective removal from inside elementary carbon grains gaseous pyrolysis products.

Dependence of generated water steam amount from w/w participation of calcium oxide in raw material batch is shown in chart below:

| Participation % CaO in batch | 2 | 6 | 10 | 14 | 18 | 24 | 28 | 30 |
|---|---|---|---|---|---|---|---|---|
| Volume of generated water steam in m³ / Mg of processed raw material batch in calcination temperature of 527°C (800°K) | 21.7 | 65.1 | 109 | 152 | 195 | 239 | 304 | 326 |

Temperatures of hot water steam generated during hydroxide decomposition depend on calcination temperature of said hydroxide hydrates and in example are:

| | |
|---|---|
| Ca(OH)2 | Mg(OH)2 |
| 800°K | 573°K |

### Example 9

### Method of producing carbon - based sorbents

Carbon-containing raw material batch subject to calcination and carbonisation process according to Examples 2 to 8 is supplemented advantageously with dissoluble hydroxides and oxides of metals with catalytic properties, such as iron, chrome, manganese, silver, copper or solutions of colloidal molecules of said metals of colloidal type of silver, gold, copper and others. In traditional methods of such products manufacturing adding metals and metal compounds with catalytic abilities takes place only by saturation of manufactured carbon sorbent with soluble salts or by mixing ground active coals with fine-grained powders of metal compounds or powders of metals with catalytic properties. In the process with method according to the invention similar effects are reached by complementing raw material batch with solution of soluble metallic compounds or metals in form of colloidal aqueous suspensions (nano-silver, nano-gold, etc.). For example complementing condensed sugar solution with solution of soluble bivalent iron salt in example ferrous acetate and then processing received raw material batch into sorbent with the method according to the invention we will receive product of very regular arrangement of catalytic substances in created sorbent structure with regularity of iron oxide in product structure unavailable with other methods.

In similar way after complementing raw material batch with nano silver solutions it is possible to produce product with unique deacidification and antiseptic properties.

### Example 10

### Method of producing carbon - based sorbents

Carbon sorbents manufactured with present methods characterize with little sorptive abilities due to the fact, that ability of absorb harmful chemical substances depends only on size and structure of sorptive surface of created sorbent and geometry of tubules created inside grains of produced sorbent during sorbent manufacturing process.

In most cases we deal with temporal impermanent connection of absorbed substances, what cause releasing of said substances into stream of flowing through the sorbent gases or liquids especially in case of achieving maximal saturation in sorbent or exceeding its optimal working temperature. In the event of manufacturing carbon sorbents with method according to the invention built in carbon sorbent structures metal oxide or hydroxide micro grains bond flowing harmful chemical substances such as HCl, H₂S, H₂SO₄, HF or HCN and many more to form of salt difficult or very difficult soluble, that are permanently build into sorbent structures. In carbon sorbent produced with method according to the invention occur additional and unexpected physical and chemical processes. The sorbent consist of active carbon grain agglomerates playing function of filter separating harmful substances contained in purified gasses, liquids and grains of metal oxides and hydroxides constituting binding ingredient chemically said substances into form of difficult soluble salts.

The ability to bond chemical substances by sorbents produced with the method according to the invention is regulated by change of amount of metal oxides added to raw material batches subject to low temperature carbonisation processes.

### Example 11

### Method of producing carbon - based sorbents

New field of sorbents use received with method according to the invention is possibility to bond heavy metal ions such as Zn⁺⁺, Pb⁺⁺, Cu⁺⁺, Co⁺⁺, Cr⁺⁺⁺ or precious metals such as Ag+, Au+. During flow through the carbon sorbents received with method according to the invention of waste solutions containing soluble salts of said metals (sulfate, nitrates, chlorides, cyanides ect.) soluble chloride, sulfate, nitrates or cyanides ions react with calcium oxide or hydroxide contained in the sorbent producing salt, changing at the same time pH reaction. As a result of change pH reaction into strongly alkaline (ph>12,0) ions of mentioned metals transform into of difficult soluble hydroxides and remain in sorbent structures.

### Example 12

### Method of producing carbon - based sorbents

In case of adding to raw material batch subject to low temperature carbonisation and carbonisation metals with catalytic activity preferably in form of their salts such as AlCl₃, MgCl₂, FeCl₂, FeCl₃, CuCl₂, CrCl₃ and compounds activating surfaces of produced sorbent for example phosphoric acid, the sorbents receive additionally valuable catalytic abilities useful in industrial processes.

### Example 13

### Method of producing carbon - based sorbents

Another field of use the method according to the invention is possibility to produce extra pure active carbons with organized structures. Difficulties in active carbon production with organized repetitive microstructures are one of the basic barriers preventing carbon base nanotechnologies development. Produced previously for nanotechnologies needs carbon semi products for example from wood low temperature carbonisation, vegetable waste biomass, soot thermal treatment, etc., do not guarantee receiving carbon raw material with necessary purity level and repetitive of carbon structures (carbon chains and rings). In case of biomass low temperature carbonisation and carbonisation with the method according to the invention due to strict process parameters control of carbon-containing raw materials of high and very high purity level and structures organization it is possible to produce carbons with structures being derivatives of carbon structures present in raw materials used to produce them. With the method according to the invention it is possible to receive stereo specific carbon structures preserving chains and rings structural arrangement similar to existing in initial raw materials it was produced from. The most important raw materials used in production of super pure active carbons with repetitive microstructures with method according to the invention are **monosaccharide -** carbohydrates, in structure of which exist 3 to 7 carbon atoms and **polysaccharides** which are combination of monosaccharide. Monosaccharide can exist in chain or ring form if they contain at least 4 carbon atoms per particle. All mentioned monosaccharide easily crystallize and are easily soluble in water. Monosaccharide possible to use in the process inter alia are five-carbon ribose and deoxyribose and six carbon: glucose, fructose, mannose and galactose. Said saccharides can form disaccharides, oligosaccharides or polysaccharides, for example: maltose (glucose + glucose), saccharose (glucose + fructose), lactose (glucose + galactose).

During carbon sorbent production said raw materials in dried form or in form of solutions or aqueous suspensions are mixed in appropriate proportions with metal and then are subject to low temperature carbonisation and carbonisation receiving carbon with organized structures additionally purified by high temperature refinement with overheated water steam. Used in this case oxides can be various oxides and hydroxides of sodium, potassium, calcium, iron, copper, ect.

In case of using products as sorbents, contained in created product metal oxides and/ or hydrates of said products remains. In case of using produced coal grains in carbon nanotechnologies metal oxides and hydroxides contained in the product are washed with water preferably distilled water or acid aqueous solutions receiving pure carbon products useful in further processes.

### Example 14

### Method of producing carbon - based sorbents

The sorbent received in sugar mixture low temperature carbonisation and carbonisation in amount of 85% with calcium oxide in amount of 10 % and magnesium oxide in amount of 5% is processed with method according to the invention to sorbent containing 58% of active coal, 29% of calcium hydroxide and 13 % of magnesium hydroxide is grinded and then is diluted in water to receive aqueous solution of 30 - 50 % preferably 40% that is next blown with gaseous carbon dioxide until complete transformation of calcium and magnesium hydroxides contained in the sorbent into a form of neutral carbonates. After neutralization of contained in the sorbent alkaline oxides, the product is dried and granulated and then used in animal feeding. Received product in dried form contains 50% of active carbon and 50% mineral ingredients mainly in form of calcium carbonate mixture (fine- crystalline precipitated chalk) and magnesium carbonate.

### Example 15

### Method of producing carbon - based sorbents

To condensed sugar solution, preferably containing 85% of pure saccharose and 15% of water is added in conditions of intensive mixing 0.1 to 2.0% preferably 0.5% of copper hydroxide and after intensive mixing it is dried with the method according to the invention after adding 10% w/w of reactive calcium oxide. Received dry granulate of raw material batch is processed into carbon sorbent in low temperature carbonisation and carbonisation appliance. Received with this method carbon sorbent containing 70.8% C; 27.8 % CaO and 1.4 % CuO receives elementary carbon sorption surface regularly covered with copper oxide micro grains of unique catalytic abilities.

### Example 16

### Method of producing carbon - based sorbents

The product is manufactured according to Example 15, with the difference that as activating supplement of raw material batch aqueous phosphoric acid is used in amount of 0.1% to 5.0%, preferably 2.0 % w/w and received product is used as semi product to produce diet supplements.

### Example 17

### Method of producing carbon - based sorbents

In order to give to the produced sorbent spatial structure of high mechanical resistance and attrition resistance, first metal bearing structures are prepared from steel fabrics made of heat resistant steel preferably with dimension of 0.1 to 1.0 m and various shapes (of round, square, oval or polygonal cross-section) preferably treated earlier with chemical substances solutions facilitating burden mixtures to stick to those structures made for example in form of knitted or woven spatial structures formed in appropriate lumps. Said lumps are saturated with burden solutions to receive complete filling of its inside. Ready batch is transported to low temperature carbonisation and carbonisation appliance in order to manufacture carbonic structures built in bearing structures from porous active coal. Received products are used to produce appropriate filters.

### Example 18

### Method of producing carbon - based sorbents

The sorbents are produced with method according to the invention according to Example 17, with the difference that as bearing structures porous lumps are used made of natural and/ or synthetic minerals, preferably pumice, bentonite, aluminium oxides sinters or kermesite. Bearing structures may have form of any lumps (balls, cylinders, plate, lump of regular or irregular shapes and sizes) and any spatial construction (for example fabric, knitwear made of metals resistant to high temperatures, ceramic sinters, specially formed porous mineral natural or synthetic structures).

### Example 19

### Method of producing carbon - based sorbents

The sorbents are produced according to Example 17 or 18, with the difference that bearing surfaces, before saturation, low temperature carbonisation and carbonisation, are formed into shapes corresponding with shapes of spaces of their future use, preferably in shape and form of ready filter cartridge with compatible shapes and dimensions.

### Example 20

### Method of producing carbon - based sorbents

Grinded burnt lime in amount of 90% w/w is mixed with sugar in amount of 10% w/w and then is subject to low temperature carbonisation with the method according to the invention with receive of product containing 97% of burnt lime and 3% w/w of reactive active carbon. Received product is subject to hydratation with known methods with use of water or 20% of ethyl or propyl alcohol water solutions with creation of porous carbon and lime sorbent containing 98% of lime hydrate Ca(OH)₂ and 2% of active carbon.

Due to application in the alcohol water solution hydration process received product is characterized with very active porous structure with sorption properties combining lime hydrate and active carbon features.

As a result of processing mentioned mixture of burnt grounded lime and carbohydrates with the method according to the invention described above mixture of active carbon and lime oxide is received, that is next subject to hydration with water or with alcohol water solutions with creation of porous carbon sorbent structures or porous reactive lime hydrate.

Due to the method according to the invention received sorbent obtains unexpected properties allowing to use it for example to effective heavy metal bonding with combustion gases. While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

All publications and patent applications mentioned in this specification are indicative of the level of skill of those skilled in the art to which this invention pertains. All publications and patent applications mentioned in this specification are herein incorporated by reference to the same extent as if each individual publication or patent application mentioned in this specification was specifically and individually indicated to be incorporated by reference.

## Claims

1. A method of manufacturing carbon-containing sorbent materials, the method comprising:
low temperature carbonisation and calcination of substances containing carbon, wherein after careful mixing of carbon-containing raw materials and corrective supplements with reagents, optimally with hydrates of oxides of I, II or III groups of periodic system received homogeneous substance is exposed to low temperature carbonisation and carbonisation process with simultaneous dehydration process of contained hydrates, creating autogenous microreators in each single grain of hydrate inside created substance and received as a result of low temperature carbonisation by thermal decomposition, overheated dry steam of high temperature, over 500°C, is directed in opposite direction through whole volume of stream, of constantly delivered to the process new batch of low temperature carbonized and carbonized raw material, along with corrective supplements and hydrates in different phases of transforming said raw material into porous sorbent structures, evenly heating them in whole volume, in lower part of low temperature carbonisation and carbonisation zone from 500°C to 280°C and then in upper zone of low temperature carbonisation and carbonisation up to the temperature of 280°C to - 100°C, whereas as a result of forced flow in opposite direction of overheated dry steam through created porous sorbent structures, volatile and tarry product of thermal decomposition are released, which along with steam are directed upwards, where they meet reactive hydrates of elements of I, II, III group of periodic system, constituting filters binding liquid and gaseous impurities, moreover by directing against the stream dry overheated steam through tubes and pores of creating sorbent, simultaneously a process of effective refinement and activation of porous sorbent structures is conducted.

2. The method of carbon sorbent manufacturing according to Claim 1, wherein as organic carbon-containing raw materials beet sugar is used, preferably in form of cumulated purified aqueous solution containing from 50% to 90% w/w of sugar and reagent, preferably burnt lime grounded in high reactivity, preferably with parameter of t₆₀ < 2 minutes in amount of from 5 to 30% preferably 18% of w/w, whereas mentioned components are added to the process with constant w/w efficiency continuously, roasting them at the same time and carefully mixing and displacing reacting substance in reaction chamber, then we carry out a drying and homogenization processes of received substance, in form of loose, dry and granulated semi- product of homogeneous structure, next received substance is subject to low temperature carbonisation and carbonisation by letting hot gasses received from combustion of part of drawn away low temperature carbonisation products, or received sorbent is displaced to roast zone with temperature of 600°C, where porous carbon sorbent agglomerates and grains of calcined calcium oxide with significant mechanical resistance are produced.

3. The method of carbon sorbent manufacturing according to claim 1, wherein dry, ground homogeneous refined saccharide mixture is used with addition of 1.0% to 10 %, preferably 5%, of ground burnt lime of very high purity and reactivity or 1.3% to 13% preferably 6 % of calcium hydrate of very high purity.

4. The method of carbon sorbent manufacturing according to claim 1 wherein as raw materials batch are used shredded homogenous organic materials of high purity, preferably saccharide, starch, cellulose and/ or organic substances of uniform chemical structure separately or in form of mixtures, said raw materials after mixing with very pure oxides or hydrates of elements of group I, II and III of periodic table, preferably calcium oxide or hydrate used raw material batch to produce carbon sorbents of special purpose with ordered structures.

5. The method of carbon sorbent manufacturing according to claims 1, wherein carbon-containing substances used chemical substances preferably monosaccharide, of which structures contain 3 to 7 carbon atoms and/ or polysaccharides which are combination of monosaccharide, preferably glycerin, ribose, deoxyribose glucose, fructose, mannose and galactose and disaccharides, oligosaccharides or polysaccharides.

6. The method of carbon sorbent manufacturing according to claim 1, wherein to initially shredded raw material, preferably to dry sugar of 99.99% purity 10% w/w of pure reactive ground burnt calcium is added, containing at least 99.9% of CaO or 13% w/w of pure ground calcium hydrate Ca(OH)₂ containing at least 99.9% of hydrate, and then received homogenous raw material batch is constantly distributed to low temperature carbonisation and carbonisation zone, sustaining monitored temperature profile from environmental temperature up to 800°C, so displaced by particular zones of reactive chamber raw material batch is subject to sequential low temperature carbonisation and carbonisation reactions and then subject to refinement of produced porous carbon structures by directing in raw material batch autogenous stream of hot steam, generated during thermal decomposition of hydrates.

7. The method of carbon sorbent manufacturing according to claim 1, wherein contained in produced sorbent metal oxides and/ or their hydrates are removed by rinsing with solvents, including water, preferably distilled water and/ or acids, preferably diluted acids aqueous solutions composing soluble salts with metals oxides and hydrates occurred in the sorbent.

8. The method of carbon sorbent manufacturing according to claim 1, wherein as carbon-containing raw material subject to low temperature carbonisation and carbonisation are used organic substances containing chemical compounds of aliphatic or cyclic structure of maximal high purity and repeatability of structures, preferably refined coal tars, pitch, polymers and copolymers of cyclic and aliphatic compounds.

9. The method of carbon sorbent manufacturing according to claim 1, wherein in low temperature carbonisation and carbonisation process to raw material input are added heat resistant metal elements in form of balls, rings, cylinders of various sizes or similar elements made of heat resistant chemical compounds, such as calcium, aluminium, magnesium oxides.

10. The method of carbon sorbent manufacturing according to claim 1, wherein amount of generated water steam used in refinement process is controlled by changes of the amount of oxide or hydroxide in raw material batch and temperature of refinement is controlled by change of used type of metal oxide or hydroxide of I, II or III periodic table.

11. The method of carbon sorbent manufacturing according to claim 1, wherein carbon-containing raw material batch subject to low temperature carbonisation and carbonisation process is supplemented preferably with dissoluble hydroxides and oxides of metals with catalytic properties, preferably of zinc, iron, chrome, vanadium, nickel, cobalt, manganese, silver, copper or solutions of colloidal molecules of said metals, preferably in colloidal form, preferably of nickel, molybdenum, vanadium, silver, gold, copper.

12. The method of carbon sorbent manufacturing according to claim 1, wherein raw material batches subject to low temperature carbonisation and carbonisation are supplemented with chemical compounds of catalytic properties and activating structures of activated carbon, preferably with compounds of metals and metalloid, preferably in shredded form and/ or in form of aqueous solution of its salts dissoluble in water.

13. The method of carbon sorbent manufacturing according to claim 1, wherein in the low temperature carbonisation as raw material batch sugar is used in amount of 50% to 90% w/w, preferably in 85% w/w, with calcium oxide in amount of 5% to 15%, preferably 10% w/w and magnesium oxide in amount of 2% to 10%, preferably in 5% w/w, and product received as a result of low temperature carbonisation is shredded and mixed with water in order to receive 30 - 50%, preferably 40% water slurry, then received substance is blown with gaseous carbon dioxide until full transformation of contained in the sorbent calcium and magnesium hydroxides into inert carbonate, and created product containing in dry condition 50% of activated carbon and 50% of mineral components, mostly in form of calcium carbonate (fine-crystalline chalk precipitated) and magnesium carbonate, is dried and granulated.

14. The method of carbon sorbent manufacturing according to claim 1, wherein to concentrated sugar solution containing from 60 to 90% preferably 85% of pure saccharine and from 10 to 40%, preferably 15% of water a 0,1 to 2,0%, preferably 0,5% of elements or its catalytic compounds, preferably of zinc, iron, copper, chrome, vanadium, nickel, cobalt, manganese, molybdenum, silver, gold, platinum in form of colloidal particles of said metals and/or their chemical compounds, preferably in form of salt aqueous solutions and/ or hydroxides receiving uniform mixtures that are condensed by adding 10% w/w of reactive calcium oxide.

15. The method of carbon sorbent manufacturing according to claims 1, wherein to give to the produced sorbents spatial structures with high porosity, mechanical durability and attrition resistance, first, bearing structures of the sorbent are prepared, preferably of steel fibres made of heat resistance and heat-temperature creep resisting steel, preferably with surface section of 0.1 to 1.0 mm² and various shapes, preferably with circular, rectangular, oval or polygonal shape section, preferably previously treated with chemical compounds solutions facilitating adherence of input substances to materials constituting said structures, preferably produced in form of strick or woven spatial structures formed into appropriate solids, said bearing structures are saturated with solutions of input subject to low temperature carbonisation and carbonisation, preferably to complete filling of their interiors, then complete inputs are subject to low temperature carbonisation and carbonisation process in order to create structures of porous activated carbon, forming with said bearing structures integrated sorbent structures.

16. The method of carbon sorbent manufacturing according to claim 1, wherein to the process spatial structures of high porosity, mechanical durability and attrition resistances porous solids are introduced, made of natural and/ or synthetic minerals, preferably of pumice, bentonite, sintered aluminium or LECA (light expanded clay aggregate) oxide, preferably of ceramic sinters.
